# EUROPÄISCHE PATENTSCHRIFT

(11) **EP 2 384 271 B1**
(45) Veröffentlichungstag und Bekanntmachung des Hinweises auf die Patenterteilung: **25.09.2013**
(21) Anmeldenummer: 09799646.6
(22) Anmeldetag: 29.12.2009
(51) Int. Cl.: B29B 9/16, C08J 3/12, C08L 19/00, B29B 17/00, E01C 13/08, E01C 13/06

(54) **VERFAHREN ZUR HERSTELLUNG VON BESCHICHTETEN GUMMIPARTIKELN, UND BESCHICHTETE GUMMIPARTIKEL**
METHOD FOR THE PRODUCTION OF COATED RUBBER PARTICLES AND COATED RUBBER PARTICLES
PROCÉDÉ DE FABRICATION DE PARTICULES DE CAOUTCHOUC ENROBÉES, ET PARTICULES DE CAOUTCHOUC

(30) Priorität: 13.01.2009 DE 102009000180
(43) Veröffentlichungstag der Anmeldung: 09.11.2011
(73) Patentinhaber: Evonik Degussa GmbH, 45128 Essen (DE)
(72) Erfinder: BERLINEANU, Andreas, 45772 Marl (DE); LUCE, Kirsten, 44623 Herne (DE); BUKOHL, Margit, 45770 Marl (DE); DUDEK, Nicole, 45772 Marl (DE); JITTENMEIER, Siegfried, 45768 Marl (DE); CRUZ, Marisa, 63538 Großkrotzenburg (DE); FUCHS, Rainer, 63776 Mömbris (DE); KUHN, Frank Dieter, 63571 Gelnhausen (DE)
(86) Internationale Anmeldenummer: PCT/EP2009/067972
(87) Internationale Veröffentlichungsnummer: WO 2010/081628

(56) Entgegenhaltungen:
- WO-A1-2005/087472
- WO-A1-2009/103607
- US-A- 3 102 043
- US-A- 3 930 107
- US-A- 5 714 263
- US-A- 5 985 392
- US-A- 6 036 998

## Beschreibung

### Gebiet der Erfindung

Die Erfindung betrifft ein Verfahren zur Beschichtung von Gummipartikeln, hergestellt aus Altreifen, das Beschichtungsmittel, das Beschichtungsverfahren und das beschichtete Gummipartikel sowie seine Verwendung als Einstreu in Kunstrasen oder für andere Bodenbeläge, beispielsweise im Sportstättenbau. Die Beschichtung von weitem Gummioberflächen und Gegenständen aus Gummi ist ebenfalls möglich.

### Stand der Technik

EP 1 416 009 (Mülsener Recycling- und handelsgesellschaft mbH) beschreibt ein loses, rieselfähiges Gummigranulat, welches mit einem Bindemittel auf Polyurethan-Basis überzogen wird. Das Bindemittel kann optional auch eingefärbt werden. Der Durchmesser der Gummipartikel liegt zwischen 0,5 mm und 2,5 mm, die mittlere Schichtdicke der Beschichtung beträgt 5 Mikrometer bis 20 Mikrometer, an einigen Stellen kann die Schicht bis 35 Mikrometer dick sein. Mechanische oder chemische Eigenschaften der beschichteten Gummipartikel werden nicht offenbart.

DE 196 31 251 (ContiTech Holding) beschreibt einen mit einem flammhemmend ausgerüsteten Bindemittelüberzug beschichteten Gummigranulatkörper. Als Bindemittel dient ein Kautschuk, als Flammschutzmittel werden anorganische Flammschutzmittel, wie beispielsweise Magnesiumhydroxyd oder Aluminiumhydroxyd eingesetzt. Die mit der schwer entflammbaren Beschichtung versehenen Gummigranulatkörper werden zu schwer entflammbaren Gummiwerkstücken verarbeitet.

DE 24 55 679 (Bayer AG) beschreibt die Beschichtung von Gummipartikeln mit einem Durchmesser von 0,5 bis 6 mm mit einem Bindemittel auf Basis von Polyisocyanaten, diese beschichteten Partikel werden zu elastischen Bodenbelägen weiterverarbeitet.

DE 25 24 877 (Schramm) beschreibt einen Fußbodenbelag, beispielsweise für Stallböden, aus beschichteten Partikeln, der in situ ausgehärtet wird. Irgendwelche nähere Angaben zu den physikalischen Eigenschaften der Beschichtung werden nicht gemacht.

DE 21 10 327 (Allwelt) beschreibt ein Herstellungsverfahren für elastische Sportböden aus Altreifengranulat und Bindemittel. Granulat und Bindemittel werden vermischt und härten zum Boden aus.

Ein körniges, rieselfähiges Produkt, das als Einstreu für Kunstrasen verwendet werden könnte, wird in den vier letztgenannten Patentpublikationen nicht beschrieben, vielmehr steht die Vernetzung der erhaltenen beschichteten Partikel zu einem massiven Bodenbelag im Vordergrund der Bemühungen.

DE 196 38 312 (Martin) beschreibt ein fugenloses Dämmmaterial aus Gummigranulat und einem Bindemittel, wobei als Bindemittel ein Epoxidharz oder ein (Meth)acrylatharz verwendet wird.

WO 2002/18706 (Fieldturf Inc.) beschreibt ein transportables, modulares Kunstrasenelement aus Rasenflächenelement und Basiselement und einer Einstreu in das Rasenflächenelement. Die Einstreu kann aus nicht näher spezifizierten Gummipartikeln, aus Sand oder aus einer Mischung aus Sand und Gummipartikeln bestehen. Eine Beschichtung der Gummipartikel wird nicht erwähnt.

WO 2002/060290 (Groundsape Technologies LLC) beschreibt ein Material aus vulkanisierten Gummipartikeln, einer ersten, farbigen Beschichtungsschicht, die die vulkanisierten Gummipartikel bedeckt und einer zweiten Beschichtungsschicht, die die farbige Beschichtungsschicht vor Abrasion schützt. Die zweite Beschichtungsschicht weist als Bindemittel ein Polyacrylat, ein Polyurethan oder einen Styrol/Butadien-Gummi auf.

US 2002/0128366 (Coffey) beschreibt ein Verfahren zur Herstellung von gefärbten Partikeln aus vulkanisiertem Gummi, umfassend folgende Schritte: Man fügt eine wässrige Pigmentdispersion zu den noch ungefärbten vulkanisierten Gummipartikeln hinzu und mischt die beiden Bestandteile solange, bis die Gummipartikel gefärbt sind, fügt dann einen Elastomer-Latex hinzu, mischt erneut und lässt den Latex abbinden. Als Elastomer verwendet man entweder einen Styrol/Butadien-Gummi oder einen Polybutadien-Gummi.

DE 103 45 964 (Weitzel) beschreibt ein mit einem mineralstoffhaltigen Überzug versehenes Granulat aus Gummipartikeln. Nachteilig an diesem mineralstoffhaltigen Überzug ist die Tatsache, dass der mineralstoffhaltige Überzug wesentlich weniger elastisch als das Bindemittel ist und daher zum Ausbrechen neigen kann.

In US 6,036,998 ist ein Verfahren zur Einfärbung von EPDM offenbart. Dazu wird das EPDM als Granulat mit einer wasserbasierten Mischung aus Epoxiden, Urethanen oder Epoxyestern, sowie einer Farbzusammensetzung enthaltend Silane, Titanate oder Zirconate in einem Mischer versetzt und anschließend wärmebehandelt.

In US 3,930,107 ist ein Verfahren zur Beschichtung nur von nicht vulkanisierten Gummipartikeln offenbart. Das dazu verwendete Bindemittel besteht überwiegend aus 1,2-Polybutadien.

### Nachteile des Standes der Technik

Der zitierte Stand der Technik weist als Nachteil auf, dass keine physikalischen und/oder chemischen Daten offenbart werden, die die für Kunstrasenfüllmaterialien erforderliche Langzeitbewitterungsstabilität belegen. Ferner fehlen Daten zur Abriebfestigkeit der ummantelten Gummipartikel, diese Eigenschaft ist wichtig für den störungsfreien Spielbetrieb auf der mit Kunstrasenfüllmaterialien ausgerüsteten Sportstätte, denn ein zu hoher Anteil an Abrieb führt zu hoher Staubentwicklung und ein zu hoher Anteil an agglomerierten Partikeln führt zu unkontrolliertem und unvorhersehbarem Sprungverhalten der auftreffenden Bälle.

Ferner sollte ein einfaches Beschichtungsverfahren für die Gummigranulate entwickelt werden, um den Forderungen nach kostengünstiger Herstellung nachzukommen.

### Aufgabe

In Anbetracht des oben zitierten Standes der Technik mit seinen Nachteilen bestanden nun die Aufgaben, ein weiters Herstellungsverfahren zur Herstellung eines freifliesenden Gummigranulats zur Verfügung zu stellen. Das Verfahren soll einfach sein, gut in einen größeren Maßstab übertragbar sein und ohne Lösungsmittel auskommen. Darüber hinaus soll das Verfahren kostengünstig sein.

Die technischen Anforderungen an eine Kunstrasenfläche für Sportstätten sind in der DIN V 18035-7 (Vornorm) niedergelegt. Diese Norm gilt für eine Vielzahl von Sportarten, wie beispielsweise Fußball, Hockey, American Football oder Tennis.

Die Füllmaterialen müssen eine gewisse Resistenz gegen Befeuchtung und die daraus resultierende Auswaschung von insbesondere schwermetallhaltigen wässrigen Lösungen aufweisen, da die DIN V 18035-7 (Vornorm) vorsieht, daß zur Verbesserung der sport- und schutzfunktionellen Eigenschaften und zur Verringerung des Verschleißes eine Möglichkeit zur Befeuchtung der Kunstrasenfläche vorgesehen sein kann.

In der Tabelle 6, Zeile 19 der Norm ist festgelegt, dass elastische Füllstoffe beispielsweise aus EPDM-Vulkanisat und/oder Gummirezyklat bestehen können. Die Kornbandbreite soll zwischen 0,5 mm und 4 mm liegen, wobei der Anteil an Bestandteilen unter 0,5 mm geringer als 1 % sein soll. Die Kornform soll kantig geschnitten sein.

### Lösung

Gelöst werden die Aufgaben durch ein Verfahren des Anspruchs 1 oder des Anspruchs 2. Weitere vorteilhafte Ausführungsformen werden in den abhängigen Ansprüchen unter Schutz gestellt.

Die Aufgaben werden gelöst durch ein Mehrkomponentensystem zur Beschichtung von Gummigranulatkörpern in einem Wirbelschichtapparat, einem Feststoffmischer oder in einem Trommelmischer. Dieses System besteht aus einer Bindemittelkomponente auf Epoxidharzbasis und einem Anhydridhärter. Die Vernetzungsreaktion kann mit verschiedenen Katalysatoren befördert werden.

Die Aushärtung der Beschichtung erfolgt in einem Temperaturbereich von 60 Grad Celsius bis 150 Grad Celsius, bevorzugt in einem Temperaturbereich von 80 Grad Celsius bis 120 Grad Celsius.

Die Erwärmung der Mischung kann auch durch Infrarotstrahler erfolgen, wobei die Erwärmung auch in einem zweiten Schritt erfolgen kann.

Darüber hinaus können nicht nur Gummipartikel, sonder auch Gummioberflächen oder Gummibeläge mit der erfindungsgemäßen Mischung beschichtet werden.

### Zusammensetzung der Beschichtung

Die Bindemittelkomponente kann aus einem oder mehreren Epoxidharzen bestehen. Hierbei kommen die klassischen Bisphenol A-Harze, Bisphenol F-Harze, Bisphenol AF-Harze, cycloaliphatische Epoxidharze und Epoxidharze auf Basis von hydrierten Bisphenol A in Frage. Festharze können sinnvoll in Reaktivverdünnern, wie beispielsweise aliphatische Monogylcidylether, Cresylglycidylether, p-tert Butylphenol-glycidylether, Butandioldiglycidylether, Hexandioldiglycidylether, Trimethylolpropan-triglycydilether etc. und niedrigviskosen, flüssigen Epoxidharzen gelöst werden.

Diese Bindemittelkomponente kann eine Mischung aus den genannten Stoffen sein, aber auch Pigmente, Füllstoffe, wie beispielsweise feingemahlenes Siliziumdioxyd (Quarzmehl, beispielsweise Sikron SF 800 der Firma Quarzwerke GmbH, vorzugsweise ist der Quarzsand silanisiert (Silbond FW 600 EST), um eine bessere Anbindung an die Polymermatrix zu erreichen, beispielsweise mit Glycidyloxymethylpropyltrimethoxysilan, hergestellt und vertrieben von der Evonik Degussa GmbH unter der Marke Dynasylan^{®} GLYMO), Additive, Alterungsschutzmittel, UV-Absorber, Lösemittel, Verlaufmittel, Katalysatoren enthalten. Vorzugsweise wird jedoch ein cycloaliphatisches Epoxidharz mit der Bezeichnung Epikote^{®} Resin 760 der Fa. Hexion eingesetzt.

Der Anhydridhärter kann mit Maleinsäureanhydrid modifizierte Polymere unterschiedlicher chemischer Basis und bzw. oder Methylhexahydrophthalsäureanhydrid (Epikure^{®} Curing Agent 868, Fa. Hexion), Methyltetrahydrophthalsäureanhydrid (Epikure^{®} Curing Agent 866, Fa. Hexion) enthalten.

Unter mit Maleinsäureanhydrid modifizierten Polymeren versteht man Polyalkenylene, bevorzugt auf Basis von Butadien-1.3, Isopren, 2,3-Dimethylbutadien-1.3 und Chloropren.

Es können Homo- oder auch Copolymerisate der o. g. Monomere eingesetzt werden, bevorzugt sind aber Homopolymere, vor allem die des Butadien-1.3. Die Polyalkenylene können 1,4- oder 1,2-verknüpft sein. Es können aber ebenso Gemische aus 1,2- und 1,4-Verknüpfungen vorliegen, wobei die 1,4-Verknüpfung sowohl cis- als auch trans-Anordnungen einnehmen kann. Ganz besonders bevorzugt wird ein Polybutadien mit ca. 75 % 1,4-cis-, ca. 24% 1,4-trans- und ca. 1 % 1,2-Doppelbindungen eingesetzt (Polyöl Degussa).

Des Weiteren können auch Polyalkenylene eingesetzt werden, die aus mindestens einem der o. g. monomeren Diene und einer oder mehreren Vinylverbindungen und/oder Alkenen aufgebaut sind. Geeignete Vinylverbindungen sind z. B. Styrole oder substituierte Styrole, Vinylether bzw. Acrylsäure- oder Methacrylsäureester. Geeignete Alkene sind z. B. Ethen, Propen, Buten oder iso-Buten. Auch natürliche Öle, wie Kokosöl, Palmöl, Ricinusöl, Olivenöl, Erdnussöl, Rapsöl, Sojaöl, Sonnenblumenöl, Mohnöl, Leinöl, Holzöl etc. können mit Maleinsäureanhydrid modifiziert werden.

Die mit Maleinsäureanhydrid modifizierten Polymere können 1 bis 20 Gewichtsprozent Maleinsäureanhydrid enthalten. Der bevorzugte Maleinsäureanhydridgehalt beträgt zwischen 7 und 14 Gewichtsprozent.

Beispielsweise wird als mit Maleinsäureanhydrid modifiziertes Polymer das Produkt POLYVEST^{®} OC 800 S, POLYVEST^{®} EP OC 1000 S oder POLYVEST^{®} EP OC 1200 S verwendet. POLYVEST^{®} OC 800 S-stellt ein mit Maleinsäureanhydrid - modifiziertes Polyöl 110 der Degussa dar und ist unter diesem Namen bei der Evonik Degussa GmbH erhältlich.

POLYVEST^{®} OC 800 S und POLYVEST^{®} EP OC 1200 S enthalten statistisch verteilte Bernsteinsäureanhydrideinheiten. Das ursprünglich apolare Polybutadien wird dadurch polarer und für verschiedene chemische Reaktionen zugänglich. POLYVEST^{®} OC 800 S und POLYVEST^{®} EP OC 1200 S weisen gute elektrische Isoliereigenschaften und Tieftemperatureigenschaften auf. POLYVEST^{®} OC 800 S und POLYVEST^{®} EP OC 1200 S sind löslich in Aliphaten, Aromaten, Ethern und verträglich mit langöligen Alkydharzen, Kolophonium, Harzestern und Zink-Resinaten. Sie können als Vernetzerkomponenten in 2K-Systemen, als polymerer Kreideaktivator für Kautschuk-, insbesondere für EPDM-Mischungen und für wasserlösliche, oxidativ trocknende Bindemittel eingesetzt werden.

Die Härterkomponente kann wahlweise als Klarlack oder gefülltes System formuliert werden.

Als weitere Komponenten können daher der Härterkomponente optional noch organische und/oder anorganische Pigmente, Netzmittel, Dispergiermittel, Gleitmittel, organische und/oder anorganische Füllstoffe, Antioxidantien, UV-Absorber, UV-Stabilisatoren, IR-Absorber, Fliesshilfsmittel oder Verlaufshilfsmittel beigefügt werden.

Zur Beschleunigung der Vernetzungsreaktion können Katalysatoren eingesetzt werden.

Diese Katalysatoren können als dritte Komponente der Mischung aus Bindemittel- und Härterkomponente vor der Applikation zugegeben werden.

Eine Beimischung zur Bindemittel- oder Härterkomponente ist auch möglich. Tertiäre Amine wie beispielsweise Triethylamin, Cyclohexyldimethylamin, Benzyldimethylamin, N-Methylimidazol, organische Titanate, Zirkonate, Zink- und Wismutcarboxylate können als Katalysatoren eingesetzt werden.

### Bindemittelkomponente B

| **B-Komponente** | **B1** | **B2** | **B3** |
|---|---|---|---|
| Epikote Resin 760 | 73,2 | 72,8 | 45,4 |
| Tegomer E-Si 2330 | - | 5,2 | 1,4 |
| Tego Dispers 650 | - | - | 0,4 |
| Blanc fixe micro | 13,2 | 8,4 | 30,3 |
| Kronos 2190 | 10 | 10 | 15 |
| Helogengrün L 8730 | 2 | 2 | 0,5 |
| Hostapermgelb H3G | 0,6 | 0,6 | 6 |
| Wingstay L | 1 | 1 | 1 |
| | 100 | 100 | 100 |

Die Angaben bedeuten immer Gewichtsteile.

### Härterkomponente A

| **A-Komponente** | **A1** | **A1** | **A2** |
|---|---|---|---|
| Epikure Curing Agent 868 | 10 | 10 | 30 |
| Polyvest OC 800 S | 60 | 60 | - |
| Polyvest EP OC 1200 S | - | - | 70 |
| Blanc fixe micro | 11 | 11 | - |
| Kronos 2190 | 15 | 15 | - |
| Heliogengrün L 8730 | 3 | 3 | - |
| Hostapermgelb H3G | 1 | 1 | - |
| | 100 | 100 | 100 |

### Mischungsverhältnis

| | | | |
|---|---|---|---|
| Lack : Härter | B1:A1 | B2:A1 | B3:A2 |
| Mischungsverhältnis | 1:4 | 1:4 | 1:1 |

### Katalysator

| | | | |
|---|---|---|---|
| Lack : Härter | B1:A1 | B2:A1 | B3:A2 |
| Epikure 100 Gew.-% | 3,2 | 3,2 | 1,4 |

Als zu beschichtende Partikel werden Gummipartikel verwendet, die vorzugsweise durch Wiederaufbereitung von Altreifen gewonnen werden. Die Größe der Gummipartikel liegt zwischen 0,1 mm und 10 mm, bevorzugt zwischen 0,5 mm und 7,5 mm und besonders bevorzugt zwischen 0,4 mm und 4 mm.

Da die Gummipartikel, bedingt durch den Herstellungsprozess, keine regelmäßige Form aufweisen, sind die obigen Werte nur als Anhaltspunkte zu verstehen.

Die Dicke der Beschichtung liegt zwischen 1 µm und 100 µm, bevorzugt zwischen 2 µm und 50 µm und ganz besonders bevorzugt zwischen 5 µm und 25 µm.

Da die Gummipartikel, bedingt durch den Herstellungsprozess, keine regelmäßige Form aufweisen, sind die obigen Werte nur als Anhaltspunkte zu verstehen. Insbesondere können durch Füllung von Kavitäten der Gummipartikel lokal deutlich dickere Beschichtungen entstehen.

Die Komponenten können vorgemischt oder über eine Mehrkomponentenmischanlage, wie beispielsweise eine 2K-Misch- und Spritzanlage aufgebracht werden. Das zur Beschichtung nötige Lackmaterial, bestehend aus A-, B- und Katalysatorkomponente, kann einmalig oder in mehreren Schritten aufgetragen werden. Nach der Aufgabe jeder einzelnen Schicht kann sofort weiter beschichtet werden oder ein Vernetzungsschritt (Zeit, Erwärmung) dazwischengeschaltet werden.

### Durchführung der Erfindung

Eine Mischung B aus einem
- cycloaliphatischen Epoxidharz,
   wobei zwischen 10 Gewichts-% und 80 Gewichts-% cycloaliphatisches Epoxidharz, bevorzugt zwischen 40 Gewichts-% und 80 Gewichts-% cycloaliphatisches Epoxidharz und ganz besonders bevorzugt 45 Gewichts-% cycloaliphatisches Epoxidharz eingesetzt werden,
- Silikonöl in Mengen zwischen 0,1 Gewichts-% und 5,9 Gewichts-%,
- einem Netz- und Dispergiermittel in Mengen zwischen 0,1 Gewichts-% und 2,9 Gewichts-%,
- Antioxidans
- Bariumsulfat,
   wobei zwischen 1 Gewichts-% und 50 Gewichts-% Bariumsulfat, bevorzugt zwischen 20 Gewichts-% und 45 Gewichts-% Bariumsulfat und ganz besonders bevorzugt zwischen 30 Gewichts-% und 40 Gewichts-% Bariumsulfat eingesetzt werden,
- Titandioxid,
- weiteren Pigmenten,
- (Die weiteren Komponenten ergänzen zu 100 Gewichts-%),
und eine Mischung A aus einem
- aliphatischen Anhydrid,
   wobei zwischen 1 Gewichts-% und 50 Gewichts-% aliphatisches Anhydrid, bevorzugt zwischen 5 Gewichts-% und 40 Gewichts-% aliphatisches Anhydrid und ganz besonders bevorzugt zwischen 7 Gewichts-% und 30 Gewichts-% aliphatisches Anhydrid eingesetzt werden und
- einem MSA-modifizierten Polybutadien,
   wobei zwischen 99 Gewichts-% und 50 Gewichts-% MSA-modifiziertes Polybutadien, bevorzugt zwischen 90 Gewichts-% und 65 Gewichts-% MSA-modifiziertes Polybutadien und ganz besonders bevorzugt 70 Gewichts-% MSA-modifiziertes Polybutadien eingesetzt werden
werden im Verhältnis von 10 Gewichtsteile Mischung B zu 1 Gewichtsteil Mischung A bis 1 Gewichtsteil Mischung B zu 10 Gewichtsteile Mischung A gemischt, mit Katalysator versetzt und bei 80 Grad Celsius bis 120 Grad Celsius in einen Trommelmischer mit dem Gummigranulat gemischt. Es ist ferner möglich andere Mischungsverhältnisse einzustellen und auf die Vormischung der Beschichtungskomponenten zu verzichten und sie gleichzeitig zu dem vorgelegten Gummigranulat zuzugeben. Die bevorzugten Mischungsverhältnisse sind in der Tabelle angegeben.

### Herstellung der Mischung B

Die B3-Mischung kann wie folgt hergestellt werden:
- 45,4 Gewichts-% Epikote Resin 760 (Cycloaliphatisches Epoxydharz, Hexion),
- 1,4 Gewichts-% Tegomer E-Si 2330 (Silikonöl, Evonik)
- 0,4 Gewichts-% Tego Dispers 650 (Netz-und Dispergiermittel, Evonik)
- 30,3 Gewichts-% Blanc fixe micro (Füllstoff Bariumsulfat, Sachtleben),
- 15 Gewichts- % Kronos 2190 (Pigment TiO₂, Kronos),
- 0,5 Gewichts-% Heliogengrün L 8730 (Pigment, BASF),
- 6 Gewichts-% Hostapermgelb H3G (Pigment, Clariant),
- 1 Gewichts-% Wingstay L (Antioxidant; Fa. Eliokem)
werden dispergiert und in einer Perlmühle gemahlen bis die entsprechende Kornfeinheit erreicht wird.

### Herstellung der Mischung A

Die A2-Mischung wird unter Stickstoff hergestellt und gelagert. Dabei werden
- 30 Gew.-Teile Epikure Curing Agent 868 (Aliphatisches Anhydrid, Fa. Hexion) mit
- 70 Gew.-Teilen Polyvest EP OC 1200 S (spezielles MSA-modifiziertes Polybutadien von Evonik
unter Rühren vermischt, bis eine homogene Formulierung entstanden ist.

Die erfindungsgemäßen Formulierungen weisen hervorragende Eigenschaften auf, wie beispielsweise Abriebwerte vor und nach Belichtung und Bewitterung, Elastizität vor und nach Belichtung und Bewitterung, und sind stabil gegenüber Bewitterungseinflüssen. Darüber hinaus weisen die erfindungsgemäßen Formulierungen eine hervorragende Farbstabilität nach Belichtung und Bewitterung auf sowie eine hervorragende Stabilität bei Temperaturwechselbelastung auf und bei Belastung mit hohen Temperaturen, beispielsweise bei 50 Grad Celsius über 4 Wochen. Außerdem trocknen die erfindungsgemäßen Formulierungen leicht ab.

In einer weiteren Ausführungsform können die erfindungsgemäßen rieselfähigen Partikel, beispielsweise vor Ort, mit einer klebenden oder polymerisierenden oder vernetzenden Schicht versehen werden, die es erlaubt, die Partikel in eine beliebig geformte Matrix zu gießen und auszuhärten. Als Polymermatrix können Polyurethanharze oder Epoxidharze verwendet werden. Durch unterschiedliche Einfärbungen von Matrix und Gummigranulat können beliebige Farbeffekte realisiert werden.

Es können nicht nur Gummipartikel mit der erfindungsgemäßen Mischung beschichtet werden, sondern auch dreidimensional geformte Gegenstände aus Gummi oder Gegenstände mit einer Oberfläche aus Gummi, wie beispielsweise Spielzeug, Gummimatten oder Reifenaußenflanken.

## Patentansprüche

1. Verfahren zur Beschichtung von Gummipartikeln,
**dadurch gekennzeichnet, dass** man
eine Mischung A aus einem
aliphatischen Anhydrid,
einem MSA-modifizierten Polybutadien,
mit einer Mischung B aus einem
cycloaliphatischen Epoxidharz,
Silikonöl,
einem Netz- und Dispergiermittel,
Antioxidans
Füllstoffen
Pigmenten, und
Katalysator
in einem Trommelmischer mit den Gummipartikeln mischt und bei 80 Grad Celsius bis 120 Grad Celsius aushärtet, und dass die Mischungen A und B lösungsmittelfrei sind.

2. Verfahren nach Anspruch 1,
**dadurch gekennzeichnet, dass**
man das Verfahren in einem Wirbelschichtreaktor durchführt.

3. Verfahren nach Anspruch 1,
**dadurch gekennzeichnet, dass**
man das Verfahren in einem Feststoffmischer durchführt.

4. Beschichtete Gummipartikel, erhältlich nach einem Verfahren der Ansprüche 1 bis 3.

5. Verwendung der beschichteten Gummipartikel nach Anspruch 4 zum Bau von Sportstätten.

6. Verwendung der beschichteten Gummipartikel nach Anspruch 4 als Einstreu für Kunstrasen.

7. Kunstrasen,
**dadurch gekennzeichnet, dass**
er mit beschichteten Gummipartikeln nach Anspruch 4 gefüllt ist.

8. Verwendung der beschichteten Gummipartikel nach Anspruch 4 als Element im Landschaftsbau.

9. Verwendung der beschichteten Gummipartikel nach Anspruch 4 als Füllstoff zur Herstellung von Belägen, indem man das beschichtete Gummipartikel in eine Polymermatrix einbringt und die Polymermatrix aushärtet.

## Claims

1. Process for the coating of rubber particles,
**characterized in that**
a mixture A composed of an
aliphatic anhydride, and
of an MA-modified polybutadiene,
with a mixture B composed of a
cycloaliphatic epoxy resin,
silicone oil, and
of a wetting and dispersing agent,
antioxidant,
fillers,
pigments, and
catalyst
is mixed in a drum mixer with the rubber particles and is hardened at from 80 degrees Celsius to 120 degrees Celsius, and **in that** the mixtures A and B are solvent-free.

2. Process according to Claim 1,
**characterized in that**
the process is carried out in a fluidized-bed reactor.

3. Process according to Claim 1,
**characterized in that**
the process is carried out in a solids mixer.

4. Coated rubber particles obtainable by a process of Claims 1 to 3.

5. Use of the coated rubber particles according to Claim 4 for the construction of sports facilities.

6. Use of the coated rubber particles according to Claim 4 as infill for artificial turf.

7. Artificial turf,
**characterized in that**
it has been infilled with coated rubber particles according to Claim 4.

8. Use of the coated rubber particles according to Claim 4 as element in landscape architecture.

9. Use of the coated rubber particles according to Claim 4 as filler for the production of coverings, where the coated rubber particle is introduced into a polymer matrix and the polymer matrix is hardened.

## Revendications

1. Procédé de revêtement de particules de caoutchouc,
**caractérisé en ce qu'**un mélange A
d'un anhydride aliphatique,
d'un polybutadiène modifié par du MSA,
est mélangé avec un mélange B
d'une résine époxyde cycloaliphatique,
d'une huile de silicone,
d'un agent mouillant et dispersant,
d'antioxydants,
de charges,
de pigments et
d'un catalyseur
dans un mélangeur à tambour avec les particules de caoutchouc et durci à une température de 80 degrés Celsius à 120 degrés Celsius, et **en ce que** les mélanges A et B sont exempts de solvant.

2. Procédé selon la revendication 1, **caractérisé en ce que** le procédé est réalisé dans un réacteur à lit fluidisé.

3. Procédé selon la revendication 1, **caractérisé en ce que** le procédé est réalisé dans un mélangeur de solides.

4. Particules de caoutchouc revêtues, pouvant être obtenues par un procédé selon les revendications 1 à 3.

5. Utilisation des particules de caoutchouc revêtues selon la revendication 4 pour la construction de structures sportives.

6. Utilisation des particules de caoutchouc revêtues selon la revendication 4 en tant qu'assise pour gazon artificiel.

7. Gazon artificiel, **caractérisé en ce qu'**il est chargé avec des particules de caoutchouc revêtues selon la revendication 4.

8. Utilisation des particules de caoutchouc revêtues selon la revendication 4 en tant qu'élément de paysagerie.

9. Utilisation des particules de caoutchouc revêtues selon la revendication 4 en tant que charge pour la fabrication de revêtements, par introduction des particules de caoutchouc revêtues dans une matrice polymère et durcissement de la matrice polymère.
